# EUROPEAN PATENT APPLICATION

(11) **EP 4 697 147 A1**
(43) Date of publication of application: **18.02.2026**
(21) Application number: 24788191.5
(22) Date of filing: 12.04.2024
(51) Int. Cl.: G06F 3/0481

(54) **MEDIA CONTENT GENERATION METHOD AND APPARATUS, DEVICE, AND READABLE STORAGE MEDIUM**

(30) Priority: 14.04.2023 CN 202310403802
(71) Applicant: Beijing Zitiao Network Technology Co., Ltd., Beijing 100190 (CN)
(72) Inventor: HU, Xiaoyun, Beijing 100028 (CN); WANG, Xingyi, Beijing 100028 (CN); WANG, Daoyu, Beijing 100028 (CN)
(74) Representative: Isarpatent
(86) International application number: PCT/CN2024/087422
(87) International publication number: WO 2024/213094

(57) **Abstract**

The present disclosure relates to a media content generation method and an apparatus, a device and a readable storage medium. The method includes: presenting a media content generation interface, and the media content generation interface includes a first text information input interface and an audio material acquisition control; displaying an input component on the media content generation interface; generating first text information in the first text information input interface in response to a triggering operation on the input component; generating a second text information input interface on the media content generation interface in response to a text interface adding operation on the media content generation interface and/or in response to that the first text information exceeds an input range of the first text information input interface, and the second text information input interface is configured for generating second text information based on the triggering operation; and generating preset media content to be posted based on text information to be posted, and the text information to be posted at least includes the first text information and the second text information.

## Description

### CROSS REFERENCE TO RELATED APPLICATIONS

The present application is based on and claims priority from CN Patent Application No. 202310403802.6 filed on April 14, 2023, the disclosure of which is incorporated by reference herein in its entirety.

### TECHNICAL FIELD

The present disclosure relates to the field of computer technologies, and in particular, to a media content generation method and an apparatus, a device and a readable storage medium.

### BACKGROUND

The current internet platform generally supports users to post media content works for information posting and sharing. When a user adopts an online text input function to edit online information so as to post and share, the manner of editing and displaying the work are single.

### SUMMARY

In view of this, embodiments of the present disclosure provide a media content generation method and an apparatus, a device and a readable storage medium, so as to solve the problem that it is difficult to perform pagination in online editing of content to be posted.

In a first aspect, the disclosed embodiments provide a media content generation method, including: presenting a media content generation interface, and the media content generation interface includes a first text information input interface and an audio material acquisition control; displaying an input component on the media content generation interface; generating first text information in the first text information input interface in response to a triggering operation on the input component; generating a second text information input interface on the media content generation interface in response to a text interface adding operation on the media content generation interface and/or in response to that the first text information exceeds an input range of the first text information input interface, and the second text information input interface is configured for generating second text information based on the triggering operation; and generating preset media content to be posted based on text information to be posted, and the text information to be posted at least includes the first text information and the second text information.

According to the media content generation method, when the first text information is input through the input component displayed on the media content generation interface, when the first text information in the current first text information input interface exceeds the input range of the first text information input interface, the second text information input interface can be newly added to continue generating the second text information, so that the pagination input of the text information to be posted is realized, and the experience of online editing and posting the media content of a user are improved.

In a second aspect, the disclosed embodiments provide a media content presentation method including: displaying a media content presentation interface, the media content presentation interface includes preset media content, and the preset media content is obtained by a posting user through inputting text information based on at least two text information input interfaces; and switching to display at least two pagination pictures in the preset media content in response to a switching instruction on the preset media content, and the at least two pagination pictures correspond one-to-one with least two text information input interfaces for generating the preset media content.

According to the media content presentation method provided by the embodiment of the disclosure, the preset media content is displayed on the media content presentation interface, and the text information in the preset media content is displayed in the form of the pagination picture, so that the text information in the preset media content can be switched to be displayed, the flexible display of the preset media content is realized, and the user browsing experience is improved.

In a third aspect, the disclosed embodiments provide a media content generation apparatus, including: a generation interface display module configured for presenting a media content generation interface, and the media content generation interface includes a first text information input interface and an audio material acquisition control; an input component display module configured for displaying an input component on the media content generation interface; an information generation module configured for generating first text information in the first text information input interface in response to a triggering operation on the input component; an interface generation module configured for generating a second text information input interface on the media content generation interface in response to a text interface adding operation on the media content generation interface and/or in response to that the first text information exceeds an input range of the first text information input interface, and the second text information input interface is configured for generating second text information based on the triggering operation; and a media content generation module configured for generating preset media content to be posted based on text information to be posted, and the text information to be posted at least includes the first text information and the second text information.

In a fourth aspect, the disclosed embodiments provide a media content presentation apparatus, including: a presentation interface display module configured for displaying a media content presentation interface, the media content presentation interface includes preset media content, and the preset media content is obtained by a posting user through inputting text information based on at least two text information input interfaces; and a content presentation module configured for switching to display at least two pagination pictures in the preset media content in response to a switching instruction on the preset media content, and the at least two pagination pictures correspond one-to-one with at least two text information input interfaces for generating the preset media content.

In a fifth aspect, the disclosed embodiments provide an electronic device, the device includes: a memory and a processor, the memory and the processor being communicatively connected to each other, the memory storing therein computer instructions, and the processor executing the computer instructions to execute the media content generation method in the first aspect or any corresponding embodiment thereof, or the media content presentation method in the second aspect or any corresponding embodiment thereof.

In a sixth aspect, the disclosed embodiments provide a computer-readable storage medium storing computer instructions for causing a computer to execute the media content generation method in the first aspect or any corresponding embodiment thereof, or the media content presentation method in the second aspect or any corresponding embodiment thereof.

In a seventh aspect, the disclosed embodiments provide a computer program product including a computer program, and the computer program, when executed by a processor, implements the media content generation method in the first aspect or any corresponding embodiment thereof, or the media content presentation method in the second aspect or any corresponding embodiment thereof.

In an eighth aspect, the disclosed embodiments provide a computer program, and the computer program when executed by a processor implements the media content generation method in the first aspect or any corresponding embodiment thereof, or the media content presentation method in the second aspect or any corresponding embodiment thereof.

### BRIEF DESCRIPTION OF THE DRAWINGS

In order to more clearly illustrate the technical solutions of the embodiments of the present disclosure or the related art, the drawings used in the description of the embodiments or the related art will be briefly described below, it is obvious that the drawings in the description below are some embodiments of the present disclosure, and other drawings may be obtained by those of ordinary skill in the art without creative efforts.
Fig. 1 is a flow chart of a media content generation method according to an embodiment of the present disclosure;
Fig. 2 is a schematic diagram of a media content generation interface according to an embodiment of the present disclosure;
Fig. 3 is another flow chart of a media content generation method according to an embodiment of the present disclosure;
Fig. 4 is a further flowchart of a media content generation method according to an embodiment of the present disclosure;
Fig. 5 is yet another flow chart of a media content generation method according to an embodiment of the present disclosure;
Fig. 6 is another schematic diagram of a media content generation interface according to an embodiment of the present disclosure;
Fig. 7 is a flow chart of a media content presentation method according to an embodiment of the present disclosure;
Fig. 8 is another flow chart of a media content generation method according to an embodiment of the present disclosure;
Fig. 9 is a schematic diagram of a media content presentation interface according to an embodiment of the present disclosure;
Fig. 10 is a block diagram of a configuration of a media content generation apparatus according to an embodiment of the present disclosure;
Fig. 11 is a block diagram of a media content presentation apparatus according to an embodiment of the present disclosure;
Fig. 12 is a schematic hardware structure diagram of an electronic device according to an embodiment of the present disclosure.

### DETAILED DESCRIPTION

To make the objects, technical solutions and advantages of the embodiments of the present disclosure more apparent, the technical solutions in the embodiments of the present disclosure will be described clearly and completely with reference to the drawings in the embodiments of the present disclosure, and it is obvious that the described embodiments are some, but not all embodiments of the present disclosure. All other embodiments, which can be derived by a person skilled in the art from the embodiments disclosed herein without making any creative effort, shall fall within the protection scope of the present disclosure.

According to the technical solution, when the text information in the current text information input interface exceeds the input range, a text information input interface can be newly added to continuously generate the text information, so that pagination input with respect to the text information to be posted is realized, and the experience of editing the online text media works of a user is improved.

In accordance with an embodiment of the present disclosure, an embodiment of a media content generation method is provided, it is noted that the steps illustrated in the flowchart of the drawings may be performed in a computer system such as a set of computer-executable instructions, and that while a logical order is illustrated in the flowchart, in some cases, the steps illustrated or described may be performed in an order different than those described here.

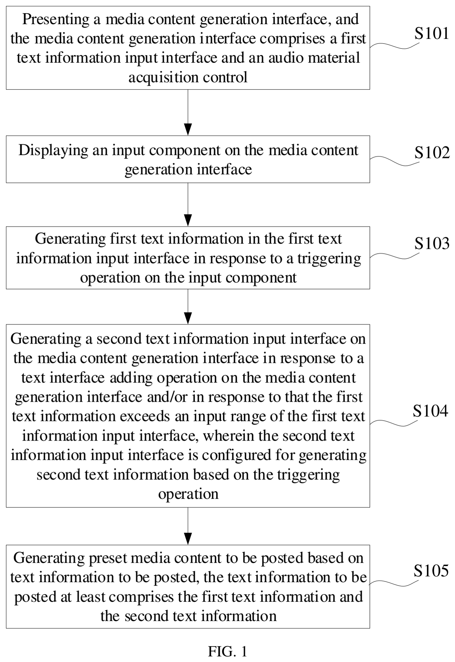

In this embodiment, a media content generation method is provided, which may be used in electronic devices such as a mobile phone and a tablet pc, and Fig. 1 is a flowchart of a media content generation method according to an embodiment of the present disclosure, and as shown in Fig. 1, the flowchart includes the following operations:
S101, presenting a media content generation interface, and the media content generation interface includes a first text information input interface and an audio material acquisition control.

The media content generation interface is an interface displayed after the posting function of the application program is triggered. Specifically, a posting function entry control is set in the application program, and when the user clicks the posting function entry of the application program, the user enters a media content generation interface. The first text information input interface in the media content generation interface is an interface which is provided for a user to input text information and present the text information.

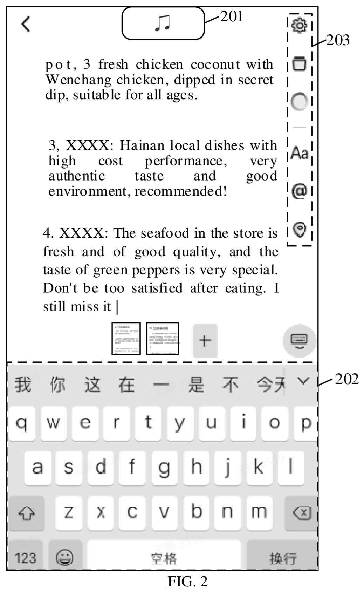

The audio material acquisition control is configured for acquiring corresponding audio information from the music library of the application. In one particular embodiment, as shown in Fig. 2, the audio material acquisition control 201 is displayed at the top of the media content generation interface so as to avoid obscuring text information presented by the first text information input interface.

S102, displaying an input component on the media content generation interface.

The input component is a component provided for a user to input text, and includes an input keyboard 202 and an input function component 203. The input function component 203 includes a background color adjustment component, a font size adjustment component, a position embedding component, a speaking to him/her component, a privacy setting component, a saving component, and the like.

When the user clicks any position in the first text information input interface in the media content generation interface, the input component can automatically pop up and be displayed in the media content generation interface. As shown in Fig. 2, an input keyboard is automatically popped up on the first text information input interface.

S103, generating first text information in the first text information input interface in response to a triggering operation on the input component.

The user inputs the text information by clicking the input keyboard in the input component, and can set the corresponding text input attribute through the input functional component. Correspondingly, the first text information input interface can respond to the triggering operation of the user on the input component, and generate and display corresponding first text information.

S104, generating a second text information input interface on the media content generation interface in response to a text interface adding operation on the media content generation interface and/or in response to that the first text information exceeds an input range of the first text information input interface, and the second text information input interface is configured for generating second text information based on the triggering operation.

Specifically, an interface adding label is arranged in the media content generation interface, and a user can add a new text information input interface, namely a second text information input interface, by clicking the interface adding label. Similarly, when the user inputs the text information on the second text information input interface, the user can generate a new text information input interface by clicking the interface adding label. Correspondingly, the electronic device can respond to the text interface adding operation of the user and add a text information input interface in the media content generation interface.

Specifically, in the process of generating the first text information on the first text information input interface, when the first text information is determined to exceed the input range of the first text information input interface, the generation of the second text information input interface is automatically triggered, so that the corresponding text information is continuously input on the second text information input interface, the text information generated on the second text information input interface is used as the second text information, and the text content of the first line of the second text information and the text content of the last line of the first text information are continuous contents.

The input range of the text information input interface is determined based on a preset display size, and the input range of the text information input interface is not specifically limited herein.

S105, generating preset media content to be posted based on text information to be posted, and the text information to be posted at least includes the first text information and the second text information.

Combining the first text information and the second text information, the text information to be posted is obtained. Then, the text information to be posted is combined with the audio information acquired by the audio material acquisition control to obtain the preset media content to be posted. Therefore, the corresponding audio information can be played while browsing the text information to be posted.

According to the media content generation method, when the first text information is input through the input component displayed on the media content generation interface, when the first text information in the current first text information input interface exceeds the input range of the first text information input interface, the second text information input interface can be newly added to continue generating the second text information, so that the pagination input of the text information to be posted is realized, and the experience of online editing and posting the media content of a user are improved.

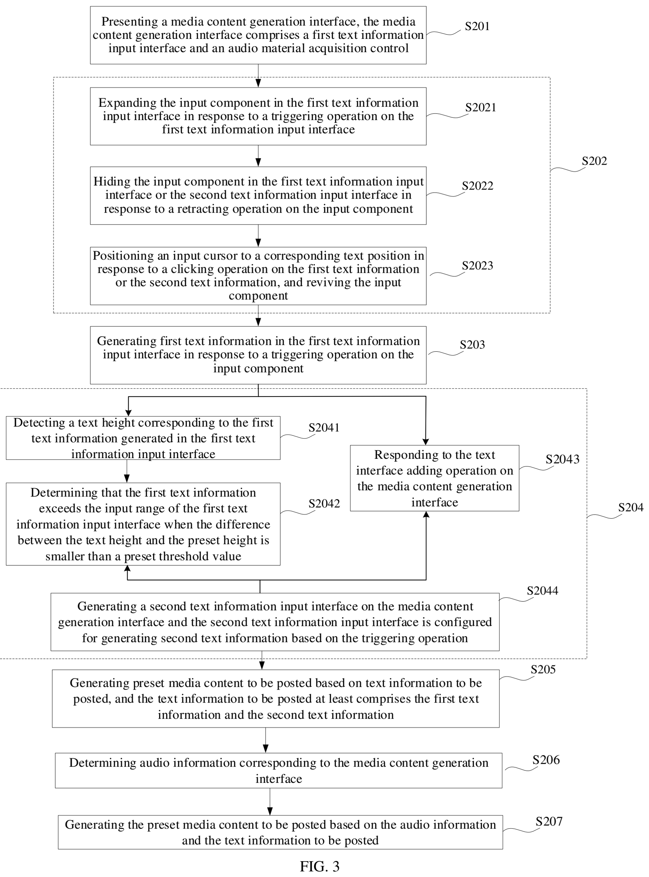

In this embodiment, a media content generation method is provided, which may be used in electronic devices such as a mobile phone and a tablet pc, and Fig. 3 is a flowchart of a media content generation method according to an embodiment of the present disclosure, and as shown in Fig. 3, the flowchart includes the following steps:
S201, presenting a media content generation interface, and the media content generation interface includes a first text information input interface and an audio material acquisition control. For detailed description, reference is made to the corresponding related description of the above embodiments, and details are not repeated herein.

S202, displaying an input component on the media content generation interface.

Specifically, in some embodiments, the step S202 may include:
S2021, expanding the input component in the first text information input interface in response to a triggering operation on the first text information input interface.

When the user triggers the text input operation on the first text information input interface, the input component can be automatically expanded. Specifically, when a user clicks at any position of a first text information input interface of the media content generation interface, the first text information input interface may respond to the click operation and trigger the start of the input component based on the click operation, so as to expand the input component in the first text information input interface.

Specifically, in some embodiments, the step S202 may further include:
S2022, hiding the input component in the first text information input interface or the second text information input interface in response to a retracting operation on the input component.

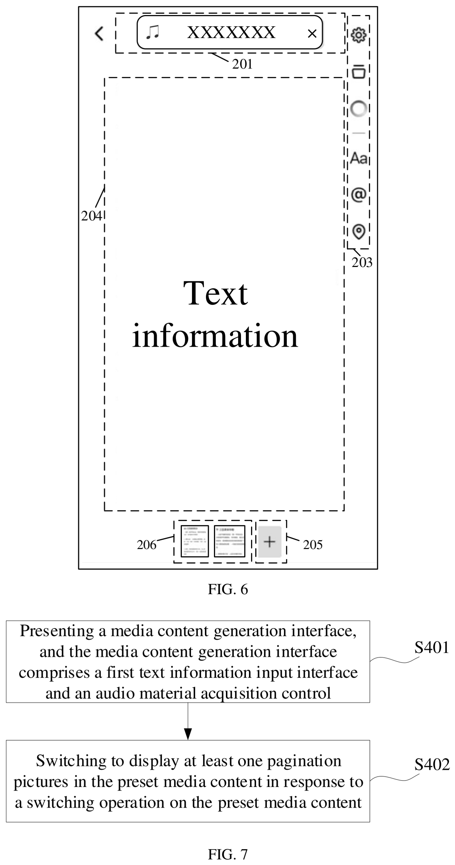

A hiding label, such as triangle identifiers with the vertex down as shown in Fig. 2, is provided in the input component. When the user completes entering the text information, the user can click the hidden label to retract the input component. Accordingly, the input module may respond to the retracting operation initiated by the user, and hide the input keyboard in the input module in the first text information input interface or the second text information input interface, so as to completely present the text information 204 displayed on the first text information input interface or the second text information input interface, as shown in Fig. 6.

S2023, positioning an input cursor to a corresponding text position in response to a clicking operation on the first text information or the second text information, and reviving the input component.

The first height between the revived input component and the input cursor is greater than or equal to a first preset height.

When the input component is in the retracted state, if a user wants to adjust or modify the first text information and/or the second text information, the user can click the text to be adjusted or modified. Correspondingly, the input cursor can be positioned to the text position clicked by the user in response to the clicking operation of the user on the first text information and/or the second text information, and the input component is revived again, so that the user can modify or adjust the text information through the input component. Therefore, the method supports the hiding and the re-triggering of the input component, and is convenient for a user to flexibly switch according to actual needs.

After the input component is revived, in order to ensure that the first text information and/or the second text information are not obscured by the revived input component, the height between the input cursor and the input component is required to be greater than or equal to a first preset height, and the first preset height is preset based on the presentation range of the text information input interface.

In some embodiments, when the input component is in the expanded state, the method may further include:
(a1) detecting whether the first text information and/or the second text information exceeds a presentation range above the input component; and
(a2) when the first text information and/or the second text information exceed the presentation range above the input component, performing display on the first text information and/or the second text information in a scrolling manner in the presentation range in response to the scrolling operation on the first text information and/or the second text information.

When the input component is in the expanded state, when the first text information and/or the second text information are determined to exceed the presentation range above the input component and not exceed the input range of the current text information input interface, the user can scroll and view the first text information and/or the second text information. Accordingly, the first text information and/or the second text information can be displayed in a scrolling manner in the presentation range above the input component in response to the scrolling operation of the user. Therefore, the user can conveniently view the edited first text information and/or the edited second text information.

S203, generating first text information in the first text information input interface in response to a triggering operation on the input component. For detailed description, reference is made to the corresponding related description of the above embodiments, and details are not repeated herein.

S204, generating a second text information input interface on the media content generation interface in response to a text interface adding operation on the media content generation interface and/or in response to that the first text information exceeds an input range of the first text information input interface, and the second text information input interface is configured for generating second text information based on the triggering operation.

Specifically, the step S204 may include:
S2041, detecting a text height corresponding to the first text information generated in the first text information input interface; and
S2042, determining that the first text information exceeds the input range of the first text information input interface when the difference between the text height and the preset height is smaller than a preset threshold value.

The first text information generated in the first text information input interface includes a plurality of lines, there is line spacing between every two lines of text information, and the line spacing between every two lines of text information is preset. The text height is the height of all lines of the first text information generated by the current first text information input interface. The predetermined height is determined according to a display area of the first text information input interface in the display screen. The preset threshold is a preset minimum height difference value which does not exceed the input range of the first text information input interface.

In the process of inputting the first text information in the first text information input interface, the text heights of all lines of the first text information presented in the first text information input interface can be acquired. The acquired text height is compared with a preset height to determine whether the difference between the acquired text height and the preset height is smaller than a preset threshold value. When the difference is smaller than the preset threshold value, the last line of the first text information will exceed the input range of the first text information input interface, and at this moment, a second text information input interface needs to be added for continuously inputting the text information.

S2043, responding to the text interface adding operation on the media content generation interface.

S2044, generating a second text information input interface on the media content generation interface and the second text information input interface is configured for generating second text information based on the triggering operation.

For the text interface adding operation on the media content generation interface, a second text information input interface is generated on the media content generation interface, and for the related content of performing second text information input, reference is made to the related description corresponding to the above embodiment, which is not described herein again.

Therefore, by detecting the text heights of all the first text information generated by the first text information input interface, and determining that the last line of text information of the first text information exceeds the input range of the first text information input interface when the difference between the text height and the preset height is smaller than the preset threshold value, the second text information input interface can be automatically added to guarantee the continuity of text information input at this moment,.

S205, generating preset media content to be posted based on text information to be posted, and the text information to be posted at least includes the first text information and the second text information. For detailed description, reference is made to the corresponding related description of the above embodiments, and details are not repeated herein.

S206, determining audio information corresponding to the media content generation interface.

The audio information is the audio required to be played in the preset media content, and the audio information is acquired and played through an audio material acquisition control in the media content generation interface. Specifically, when the user clicks the audio material acquisition control, the user can enter the audio material library, and the user can select the audio information of interest from the audio material library and present the selected audio information on the audio material acquisition control for playing.

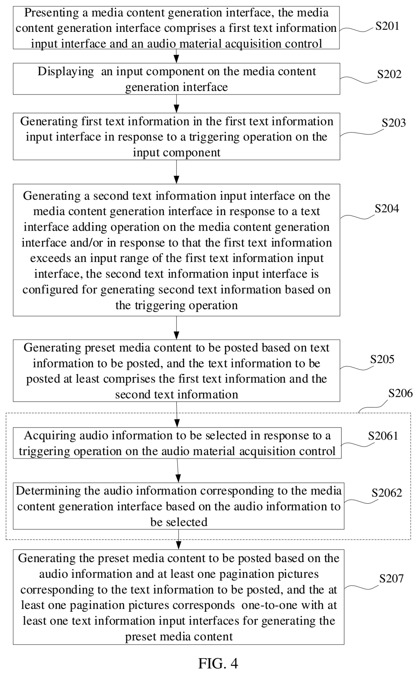

Specifically, in some embodiments, as shown in Fig. 4, the step S206 may include:
S2061, acquiring audio information to be selected in response to a triggering operation on the audio material acquisition control.

When the user triggers the audio material acquisition control, the audio material acquisition control can respond to the triggering operation to pull the audio materials in the audio material library and present all the pulled audio materials, and all the presented audio materials are the audio information to be selected.

S2062, determining the audio information corresponding to the media content generation interface based on the audio information to be selected.

The user can perform audio pre-playing of each audio information to be selected so as to select the audio information of interest. Correspondingly, the audio material acquisition control can respond to the selection operation of the user on the audio information to be selected, determine the audio information selected by the selection operation, and display and play the audio information in the audio material acquisition control of the media content generation interface.

Specifically, when the user triggers the audio material acquisition control, the audio material acquisition control may display audio information with a high usage amount, audio information collected by the user, and audio information used by the user as candidate audio information, and the user may select the audio information of interest from the candidate audio information.

Specifically, if the user is not satisfied with the audio information currently pulled by the audio material acquisition control, the user can click a "search" control in the audio information display interface, enter keywords in a pop-up search box to search for the audio information to obtain searched audio information to be selected, and then the user can select the audio information of interest from the searched audio information to be selected.

Specifically, if the user is difficult to search for audio information through the keywords, the user may click a "music" control in the search interface, enter the music library of the application, and use the music library of the application as the audio information to be selected, so that the user may select the audio information of interest from the music library of the application.

Therefore, the method supports the selection of the audio information of interest through the audio material acquisition control, so that the audio information can be fitted to the text information to be posted, and the propagation effect and the experience of viewing the preset media content can be improved.

S207, generating the preset media content to be posted based on the audio information and the text information to be posted.

By merging the audio information into the text information to be posted, the preset media content to be posted can be obtained, so that the corresponding audio information can be played while the text information to be posted is viewed.

Specifically, the step S207 may include: generating the preset media content to be posted based on the audio information and at least two pagination pictures corresponding to the text information to be posted, and the at least two pagination pictures correspond one-to-one with at least two text information input interfaces for generating the preset media content.

When the text information to be posted is the first text information input in the first text information input interface, the pagination picture corresponds to the first text information. At this time, the audio information and the pagination pictures generated based on the first text information are combined to generate the preset media content to be posted.

When the text information to be posted includes the first text information generated by the first text information input interface and the second text information generated by the second text information input interface, the first text information and the second text information respectively correspond to respective pagination pictures. At this time, the audio information, the pagination pictures generated based on the first text information and the pagination pictures generated based on the second text information are combined to generate the preset media content to be posted.

Furthermore, after the user selects the audio information, the user can be supported to edit the switching of the pagination pictures at selected music node, or the system automatically presents the pagination pictures according to the music rhythm in sync with the rhythm.

Therefore, each text information input interface corresponds to the pagination picture, and by merging the audio information with each pagination picture to generate the preset media content to be posted, the playing continuity of the audio information is ensured, and the posting quality of the preset media content is improved.

According to the media content generation method, when the first text information input interface triggers text information input, the input component can be expanded on the first text information input interface, so that a user can input text information through the input component. Meanwhile, the method can combine the audio information and the text information to be posted into the preset media content, and enriches the preset media content.

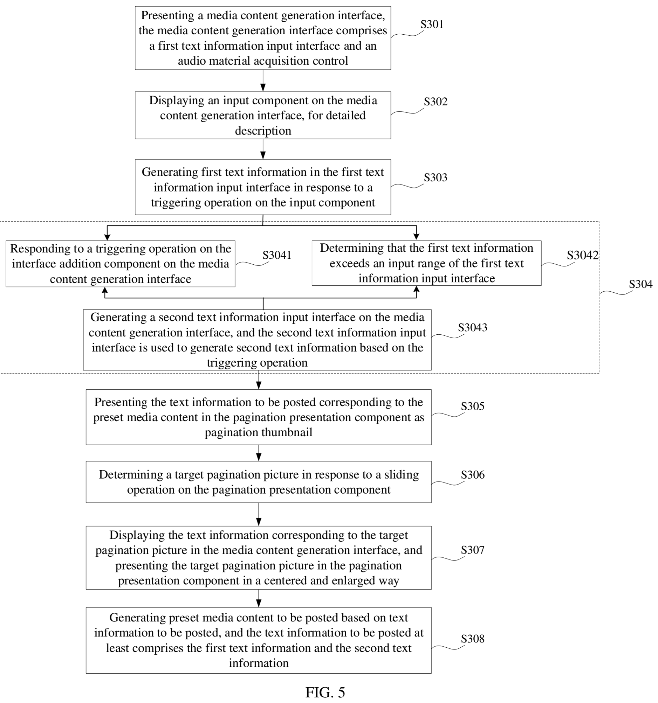

In this embodiment, a media content generation method is provided, which may be used in electronic devices such as a mobile phone and a tablet PC, and Fig. 5 is a flowchart of a media content generation method according to an embodiment of the present disclosure, and as shown in Fig. 5, the flowchart includes the following steps:
S301, presenting a media content generation interface, and the media content generation interface includes a first text information input interface and an audio material acquisition control, for detailed description, reference is made to the corresponding related description of the above embodiments, and details are not repeated herein;
S302, displaying an input component on the media content generation interface, for detailed description, reference is made to the corresponding related description of the above embodiments, and details are not repeated herein;
S303, generating first text information in the first text information input interface in response to a triggering operation on the input component, for detailed description, reference is made to the corresponding related description of the above embodiments, and details are not repeated herein; and
S304, generating a second text information input interface on the media content generation interface in response to a text interface adding operation on the media content generation interface and/or in response to that the first text information exceeds an input range of the first text information input interface, the second text information input interface is configured for generating second text information based on the triggering operation, and for the related content of generating the second text information input interface on the media content generation interface to input the second text information, reference is made to the related description corresponding to the foregoing embodiment, which is not described herein again.

In particular, the media content generation interface includes a pagination identification component that includes an interface addition component.

The pagination identification component is a component provided to the user for switching the pages of the text information after pagination, and can be displayed in the media content generation interface in a progress bar form or can be presented in the media content generation interface in a pagination picture form as thumbnail. Of course, the pagination identification component may also be presented in the media content generation interface in other forms, which are not limited in this embodiment.

The interface addition component 205 is a control provided for a user to manually add a text information input interface, and the interface addition component 205 can be fixedly presented in the pagination identification component through a corresponding identifier, such as the interface addition component "+" shown in Fig. 6.

Accordingly, the step S304 may include:
S3041, responding to a triggering operation on the interface addition component on the media content generation interface.

The user can add a text information input interface on the basis of the current text information input interface by clicking the interface addition component "+" in the pagination identification component.

Therefore, the pagination identification component is arranged in the media content generation interface and includes the interface addition component, and a user can add the text information input interface through the interface addition component, so that the flexible addition of the text information input interface is realized, and the pagination input of text information by the user can be conveniently carried out according to actual usage scenario.

S3042, determining that the first text information exceeds an input range of the first text information input interface.

S3043, generating a second text information input interface on the media content generation interface, and the second text information input interface is used to generate second text information based on the triggering operation.

For determining whether the first text information exceeds the input range of the first text information input interface, generating a second text information input interface on the media content generation interface, and inputting the second text information, reference is made to the relevant description corresponding to the above embodiment, which is not described herein again.

In some embodiments, the media content generation interface further includes a pagination presentation component, and in the process of generating the first text information and the second text information, the method may further include:
S305, presenting the text information to be posted corresponding to the preset media content in the pagination presentation component as pagination thumbnail.

The text information to be posted is generated through at least one text information input interface, and a corresponding pagination picture is generated based on the text information generated by the at least one text information input interface. Specifically, when a user generates the first text information on the first text information input interface through the input component, the first text information can be converted into a picture form, so that a pagination picture for the first text information can be obtained, and similarly, a pagination picture for the second text information can be obtained.

The thumbnails of the obtained pagination pictures are presented in the pagination presentation component 206, and the width of the thumbnail corresponding to the currently displayed pagination picture in the pagination presentation component is different from that of other thumbnails, as shown in Fig. 6. In other embodiments, each thumbnail may be uniform in width in the pagination presentation component, while thumbnails for the current page are distinctively presented by highlighting and so forth.

It should be noted that, in the expanded state and the retracted state of the input component, the width positions of the pagination identification component from the left and right of the text information input interface are kept consistent, and only the height displacement is performed.

Therefore, the pagination presentation component is arranged in the pagination identification component, and the text information to be posted in the preset media content is presented through the pagination presentation component as pagination thumbnails, so that a user can conveniently view related text information through the pagination presentation component.

In some optional embodiments, after presenting the text information to be posted corresponding to the preset media content in the pagination presentation component as pagination thumbnail, the method may further include:
S306, determining a target pagination picture in response to a sliding operation on the pagination presentation component.

When there are a plurality of pagination pictures in the pagination presentation component, the user can slide the pagination pictures in the pagination presentation component to select a target pagination picture to be viewed therefrom. Correspondingly, the pagination presentation component can slide a plurality of pagination pictures in response to the sliding operation of the user and can determine corresponding target pagination picture in response to the selection operation of the user.

The feedback information is generated to remind a user while the target pagination picture is determined. For example, when the user slidingly selects a certain pagination picture, the electronic device may perform vibration feedback to remind the user to confirm the target pagination picture selected by the user.

S307, displaying the text information corresponding to the target pagination picture in the media content generation interface, and presenting the target pagination picture in the pagination thumbnail component in a centered and enlarged way.

When the target pagination picture is determined, the text information corresponding to the target pagination picture is presented in a text information input interface of the media content generation interface. Meanwhile, the selected target pagination picture is enlarged in a left-right widening way and is displayed in the middle of the pagination thumbnail component, as shown in the Fig. 6.

Therefore, the pagination presentation component supports sliding operation, and by determining the target pagination picture from the pagination presentation component in response to the sliding operation of a user, displaying the text information of the target pagination picture in the media content generation interface, and simultaneously presenting the target pagination picture in the pagination presentation component in a centered and enlarged way, the user can know the text content currently viewed by the user, and browsing of the pages of the text information to be posted after pagination is further realized.

In some optional embodiments, during the sliding of the pagination thumbnail component, the method may further include:
(b1) determining whether to slide to last pagination picture; and
(b2) stopping sliding in response to determining to slide to the last pagination picture, and generating stop prompt information.

When the pagination presentation component contains a plurality of pagination pictures, the pagination presentation component can detect whether the user slides to the last pagination picture in real time in the sliding process of the user. Specifically, in the process of sliding leftward, whether to slide leftward to the last pagination picture is detected; in the process of sliding rightward, whether to slide rightward to the last pagination picture is detected.

When it is determined to slide to the last pagination picture, even if the user continues to slide, the pagination presentation component does not respond to the sliding operation, namely the pagination presentation component stops sliding and presenting the last pagination picture in the pagination presentation component in a centered and enlarged way, and the text information in the last pagination picture is displayed in the media content generation interface. Meanwhile, the pagination presentation component generates a stop prompt information to remind the user to slide to the last page.

In some optional embodiments, the method may further include: performing deletion and/or exchange in sequence of the pagination pictures in the pagination presentation component in response to an editing operation on each pagination picture in the pagination presentation component.

When a user finds that the text content corresponding to a certain pagination picture has redundancy or errors and the like by viewing the text information corresponding to each pagination picture, the user can delete the pagination picture. Specifically, the user can long-press the pagination picture to be deleted so that a deletion option can be popped up at the position of this pagination picture, and delete pagination pictures from the pagination presentation component by clicking the deletion option; in addition, a deletion identifier can be displayed at the position of the pagination picture, and the user can click the deletion identifier or drag the pagination picture to the deletion identifier so as to delete the pagination picture from the pagination presentation component.

When a user finds that the order of some pagination pictures in the pagination presentation component is reversed by viewing the text information corresponding to each pagination picture, the user can adjust the order of the pagination pictures with the reversed order. Specifically, if the order of the second pagination picture and the third pagination picture in the pagination presentation component is reversed, the user can long-press the second pagination picture at this time to drag the second pagination picture to the position of the third pagination picture, the third pagination picture may be automatically adjusted to the position where the second pagination picture is located before adjustment, and the second pagination picture may be located to the position where the third pagination picture is located before adjustment. Of course, the third pagination picture can also be long-pressed so as to be dragged to the position where the second pagination picture is located.

Therefore, each pagination picture presented in the pagination presentation component supports deletion, and redundant content or additional content in the text information to be posted can be flexibly deleted conveniently. Meanwhile, each pagination picture presented in the pagination presentation component supports sequence exchange, so that the display sequence of the text information to be posted can be flexibly adjusted.

S308, generating preset media content to be posted based on text information to be posted, and the text information to be posted at least includes the first text information and the second text information. For detailed description, reference is made to the corresponding related description of the above embodiments, and details are not repeated herein.

According to the media content generation method, the pagination identification component is arranged in the media content generation interface and includes the interface addition component and the pagination presentation component, so that flexible adding of the text information input interface and presentation of the text information to be posted as pagination thumbnail are achieved, and browsing of pages of the text information to be posted after pagination is further realized.

In this embodiment, a media content generation method is provided, which may be used in electronic devices such as a mobile phone and a tablet PC, and Fig. 7 is a flowchart of a media content generation method according to an embodiment of the present disclosure, and as shown in Fig. 7, the flowchart includes the following steps:
step S401, displaying a media content presentation interface, and the media content presentation interface includes preset media content.

The preset media content is obtained by the posting user through inputting the text information based on at least two text information input interfaces.

The media content presentation interface is a presentation interface displayed after the preset media content is posted. Specifically, after the generation of the preset media content is completed, the user may click the posting control set on the media content generation interface, so as to post the preset media content, and display the media content presentation interface.

S402, switching to display at least two pagination pictures in the preset media content in response to a switching instruction on the preset media content.

The at least two pagination pictures correspond one-to-one with the at least two text information input interfaces for generating the preset media content.

Because the text information in the preset media content has multiple pages, the presentation range of one screen of the media content presentation interface can not display the text information corresponding to all the pagination pictures. The user can switch the pagination pictures contained in the preset media content, and correspondingly, the media content presentation interface can respond to the switching instruction of the user and switch to display the pagination pictures contained in the preset media content so as to display the text information corresponding to each pagination picture, so that the user can view the text information corresponding to all the pagination pictures.

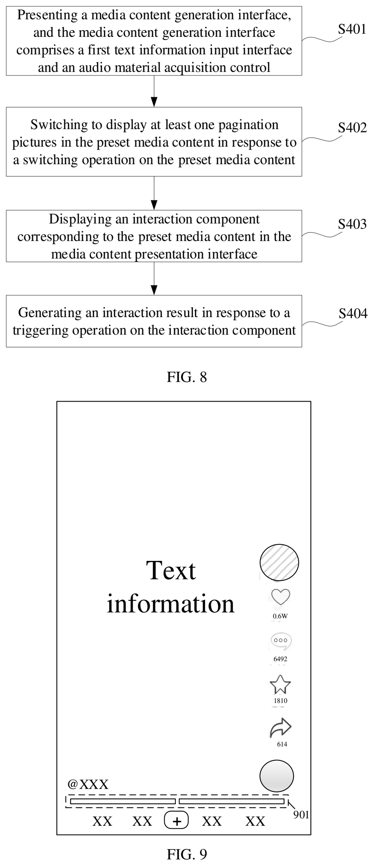

As shown in Fig. 9, the media content presentation interface may display a progress bar control 901 corresponding to the pagination picture so as to display the progress of the pagination picture currently displayed.

According to the media content presentation method provided by the embodiment of the disclosure, the preset media content is displayed on the media content presentation interface, and the text information in the preset media content is displayed in the form of the pagination picture, so that the text information in the preset media content can be switched to be displayed, the flexible display of the preset media content is realized, and the user browsing experience is improved.

In some embodiments, the switching instruction on the preset media content in step S402 includes: a switching operation triggered by a user on the media content presentation interface or playing of the preset media content to a preset time point.

Specifically, when the user reads or browses the text information presented in the current pagination picture, the user can slide (e.g., slide leftward, slide rightward, slide upward, slide downward, etc.) on the media content interface to switch the pagination picture. Correspondingly, the media content presentation interface can respond to the switching operation triggered by the user and sequentially switch the pagination pictures contained in the preset media content.

Specifically, the preset time point is a preset playing time point for the pagination picture. In a specific embodiment, when a user reads or browses text information presented on the current interface, the electronic device may obtain a time point when the user stays in a current pagination picture in real time, and when the stay time reaches a preset time point, the electronic device automatically switches to a next pagination picture, so that automatic switching of the pagination pictures is achieved.

Certainly, after the pagination pictures are automatically switched, if the user wants to return to the previous pagination picture to continuously view the text information of the previous pagination picture, the switching operation of the pagination pictures can be triggered on the media content presentation interface.

The media content presentation method provided by the embodiment of the disclosure supports manual switching of a user and automatic switching, so that text information in preset media content can be switched to be displayed, flexible switching of pagination pictures is realized, and browsing requirements of different users can be met.

In some embodiments, the displaying the media content presentation interface in step S401 includes: displaying at least two pagination pictures in the preset media content, and playing audio information included in the preset media content.

When the pagination pictures in the preset media content are presented on the media content presentation interface, the audio information corresponding to the preset media content can be started to play. Specifically, the audio information supports automatic playing in sync with the rhythm, and a user can place pagination pictures contained in preset media content on a time track corresponding to the audio information, so that when the audio information is played, the user can set each pagination picture to be presented according to the audio information in sync with the rhythm.

In some embodiments, as shown in Fig. 8, the method may further include:
step S403, displaying an interaction component corresponding to the preset media content in the media content presentation interface.

The interactive component is configured for posting comments or opinions and the like for the preset media content. As shown in Fig. 9, the interactive components include a like control 902, a comment control 903, a favorite control 904, and a share control 905 and so forth. The interactive component is displayed on the frame of the pagination picture, such as the right side of the media content presentation interface. Of course, the interactive component may also be displayed at a position such as a left side, a bottom side, or the like of the media content presentation interface, and the display position of the interactive component is not limited herein.

S404, generating an interaction result in response to a triggering operation on the interaction component.

When other users view the corresponding preset media content through the media content presentation interface, the other users can provide comments or opinions and the like on the preset media content through the interaction component. Correspondingly, the like control, the comment control, the favorite control, the share control and the like in the interactive component can respond to the triggering operation of the user and generate a corresponding interactive result. The interaction result specifically includes the number of likes, the number of comments, the comment content, the number of favorites, and the number of shares, among others.

For the user who posts the preset media content, when other users interact with the preset media content, the user who posts the preset media content can receive interaction messages generated by other users for the preset media content. Then, the user who posts the preset media content can view the users who liked, commented on, and favorited the preset media content, as well as the comments and users who shared it.

Therefore, the interaction component is arranged in the media content presentation interface, allowing users to interact with the author of the preset media content, and this facilitates the author in understanding the engagement level of the posted preset media content based on the interaction results.

According to the media content presentation method, the preset media content is displayed on the media content presentation interface, and the text information in the preset media content is displayed in the form of the pagination pictures, so that the text information in the preset media content can be switched to be displayed, the flexible presentation of the preset media content is realized, and the user browsing experience is improved.

In this embodiment, a media content generation apparatus is further provided, where the device is configured to implement the foregoing embodiments and preferred embodiments, and details of the description are omitted. As used below, the term "module" may be a combination of software and/or hardware that implements a predetermined function. Although the means described in the embodiments below are preferably implemented in software, an implementation in hardware or a combination of software and hardware is also possible and contemplated.

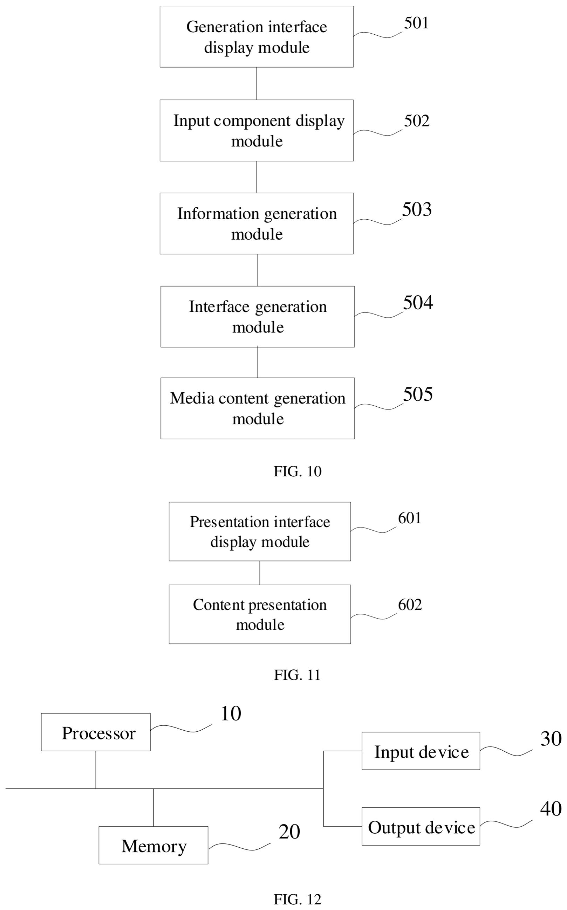

The present embodiment provides a media content generation apparatus, as shown in Fig. 11, including:
a generation interface display module 501 configured for presenting a media content generation interface, and the media content generation interface includes a first text information input interface and an audio material acquisition control;
an input component display module 502 configured for displaying an input component on the media content generation interface;
an information generation module 503 configured for generating first text information in the first text information input interface in response to a triggering operation on the input component;
an interface generation module 504 configured for generating a second text information input interface on the media content generation interface in response to a text interface adding operation on the media content generation interface and/or in response to that the first text information exceeds an input range of the first text information input interface, and the second text information input interface is configured for generating second text information based on the triggering operation; and
a media content generation module 505 configured for generating preset media content to be posted based on text information to be posted, and the text information to be posted at least includes the first text information and the second text information.

In some embodiments, the media content generation apparatus may further include:
an audio determination module configured for determining audio information corresponding to the media content generation interface; and
an audio merging module configured for generating the preset media content to be posted based on the audio information and the text information to be posted.

In some embodiments, the above audio determination module may include:
an audio acquisition unit configured for acquiring audio information to be selected in response to a triggering operation on the audio material acquisition control; and
an audio information determination unit configured for determining the audio information corresponding to the media content generation interface based on the audio information to be selected.

In some embodiments, the above audio merging module may include:
a media content generation unit configured for generating the preset media content to be posted based on the audio information and at least one pagination picture corresponding to the text information to be posted, and the at least one pagination picture corresponds one-to-one with at least one text information input interfaces for generating the preset media content.

In some embodiments, the above input component display module 502 may include:
an input component triggering unit configured for expanding the input component in the first text information input interface in response to a triggering operation on the first text information input interface.

In some embodiments, the above input component display module 502 may include:
an input component hiding unit configured for hiding the input component in the first text information input interface or the second text information input interface in response to a retracting operation on the input component; and
an input component reviving unit configured for positioning an input cursor to a corresponding text position in response to a clicking operation on the first text information or the second text information, and reviving the input component, and a first height between the revived input component and the input cursor is greater than or equal to a first preset height.

In some embodiments, the above interface generation module 504 may include:
a text height detection unit configured for determining a text height corresponding to the first text information generated in the first text information input interface; and
an input range determination unit configured for determining that the first text information exceeds the input range of the first text information input interface in response to determining that a difference between the text height and a predetermined height is less than a preset threshold.

In some embodiments, the media content generation interface includes a pagination identification component, and the pagination identification component includes an interface addition component. Accordingly, the above interface generation module 504 may include:
an interface addition triggering unit configured for responding to a triggering operation on the interface addition component on the media content generation interface.

In some embodiments, the media content generation interface further includes a pagination presentation component. Accordingly, the above interface generation module 504 may include:
a thumbnail presentation unit configured for presenting the text information to be posted corresponding to the preset media content in the pagination presentation component as pagination thumbnail.

In some embodiments, the above interface generation module 504 may include:
a sliding unit configured for determining a target pagination picture in response to a sliding operation on the pagination presentation component; and
a pagination picture presentation unit configured for displaying the text information corresponding to the target pagination picture in the media content generation interface, and presenting the target pagination picture in the pagination thumbnail component in a centered and enlarged way.

In some embodiments, the above sliding unit may include:
a sliding detection sub-unit configured for determining whether to slide to last pagination picture; and
a sliding promotion detection sub-unit configured for stopping sliding in response to determining to slide to the last pagination picture, and generating stop prompt information.

In some embodiments, the above interface generation module 504 may include:
a pagination picture editing unit configured for performing deletion and/or exchange in sequence of the pagination pictures in the pagination presentation component in response to an editing operation on each pagination picture in the pagination presentation component.

The media content generation apparatus in this embodiment is presented in the form of functional units, and the units refer to ASIC circuits, processors and memories that execute one or more software or fixed programs, and/or other devices that can provide the above functions.

Further functional descriptions of the above-mentioned modules and units are the same as those of the above-mentioned corresponding embodiments, and are not repeated here.

According to the media content generation apparatus, when the first text information is input through the input component displayed on the media content generation interface, when the first text information in the current first text information input interface exceeds the input range of the first text information input interface, the second text information input interface can be newly added to continue generating the second text information, so that the pagination input of the text information to be posted is realized, and the experience of online editing and posting the media content of a user are improved.

In this embodiment, a media content presentation apparatus is further provided, where the device is configured to implement the foregoing embodiments and preferred embodiments, and details of the description are omitted. As used below, the term "module" may be a combination of software and/or hardware that implements a predetermined function. Although the means described in the embodiments below are preferably implemented in software, an implementation in hardware or a combination of software and hardware is also possible and contemplated.

The present embodiment provides a media content presentation apparatus, as shown in Fig. 11, including:
a presentation interface display module 601 configured for displaying a media content presentation interface, the media content presentation interface includes preset media content, and the preset media content is obtained by a posting user through inputting text information based on at least two text information input interfaces; and
a content presentation module 602 configured for switching to display at least two pagination pictures in the preset media content in response to a switching instruction on the preset media content, and the at least two pagination pictures correspond one-to-one with least two text information input interfaces for generating the preset media content.

In some embodiments, the above presentation interface display module 601 may include:
an audio play unit configured for displaying at least two pagination pictures in the preset media content, and playing audio information included in the preset media content.

In some embodiments, the above switching instruction on the preset media content includes a switching operation triggered by a user on the media content presentation interface or playing of the preset media content to a preset time point.

In some embodiments, the above media content generation apparatus may further include:
an interaction component presentation module configured for displaying an interaction component corresponding to the preset media content in the media content presentation interface; and
an interaction result generation module configured for generating an interaction result in response to a triggering operation on the interaction component.

The media content presentation apparatus in this embodiment is presented as functional units, where a unit refers to an ASIC circuit, a processor and memory executing one or more software or fixed programs, and/or other devices that may provide the above-described functionality.

Further functional descriptions of the modules and units are the same as those of the corresponding embodiments, and are not repeated herein.

According to the media content presentation apparatus provided by the embodiment of the disclosure, the preset media content is displayed on the media content presentation interface, and the text information in the preset media content is displayed in the form of the pagination picture, so that the text information in the preset media content can be switched to be displayed, the flexible display of the preset media content is realized, and the user browsing experience is improved.

An embodiment of the present disclosure further provides an electronic device, which has the media content generation apparatus shown in Fig. 10 or the media content presentation apparatus shown in Fig. 11.

Referring to Fig. 12, Fig. 12 is a schematic hardware structure diagram of an electronic device provided by an embodiment of the present disclosure, and as shown in Fig. 12, the electronic device may include one or more processors 10, a memory 20, and interfaces for connecting various components, including high-speed interfaces and low-speed interfaces. The components are connected with each other by different buses, and can be installed on a common motherboard or in other ways as needed. The processor may process instructions executed within the electronic device, including instructions stored in or on the memory to display graphical information of the GUI on an external input/output device, such as a display device coupled to an interface. In some alternative embodiments, multiple processors and/or multiple buses may be used with multiple memories and multiple memories, if necessary. Similarly, multiple electronic devices can be connected, and each device provides some necessary operations (for example, as a server array, a group of blade servers, or a multiprocessor system). A processor 10 is taken as an example in Fig. 12.

The processor 10 may be a central processor, a network processor or a combination thereof. The processor 10 may further include a hardware chip. The hardware chip can be an application specific integrated circuit, a programmable logic device or a combination thereof. The programmable logic device can be a complex programmable logic device, a field programmable logic gate array, a generic array logic or any combination thereof.

The memory 20 stores instructions that can be executed by at least one processor 10, so that the at least one processor 10 can execute the method shown in the above embodiment.

The memory 20 may include a storage program area and a storage data area, and the storage program area may store an operating system and an application program required by at least one function; and the storage data area can store data created by the use of electronic equipment according to the presentation of a small program landing page, etc. In addition, the memory 20 may include high-speed random access memory and non-transitory memory, such as at least one disk memory device, flash memory device, or other non-transitory solid-state memory devices. In some alternative embodiments, the memory 20 may optionally include memories remotely located with respect to the processor 10, and these remote memories may be connected to the electronic device through a network. Examples of the above networks include, but are not limited to, the internet, an intranet, a local area network, a mobile communication network, and combinations thereof.

The memory 20 may include volatile memory, for example, random access memory; the memory can also include non-volatile memory, such as flash memory, hard disk or solid state hard disk; and the memory 20 may also include a combination of the above types of memories.

The electronic device further includes an input device 30 and an output device 40. The processor 10, the memory 20, the input device 30 and the output device 40 may be connected by a bus or other means, and bus connection is taken as example in Fig. 12.

The input device 30 can receive input digital or character information and generate key signal input related to user settings and function control of the electronic device, such as a touch screen, a keypad, a mouse, a track pad, a touch pad, a pointing stick, one or more mouse buttons, a trackball, a joystick and the like. The output device 40 may include a display device, an auxiliary lighting device (for example, an LED), a tactile feedback device (for example, a vibration motor), and the like. The above display devices include, but are not limited to, liquid crystal displays, light emitting diodes, displays and plasma displays. In some alternative embodiments, the display device may be a touch screen.

The electronic device also includes a communication interface 50 for the electronic device to communicate with other devices or communication networks.

The embodiment of the present disclosure also provides a computer-readable storage medium, and the above-mentioned method according to the embodiment of the present disclosure can be implemented in hardware, firmware, or computer code which can be recorded in the storage medium or downloaded through the network and originally stored in a remote storage medium or a non-temporary machine-readable storage medium and will be stored in a local storage medium, so that the method described herein can be stored in such software processing on a storage medium using a general-purpose computer, a special-purpose processor or programmable or special-purpose hardware. The storage medium can be a magnetic disk, an optical disk, a read-only memory, a random access memory, a flash memory, a hard disk or a solid-state hard disk, etc. Further, the storage medium may also include a combination of the above kinds of memories. It can be understood that a computer, processor, microprocessor controller or programmable hardware includes a storage component that can store or receive software or computer code, and when the software or computer code is accessed and executed by the computer, processor or hardware, the method shown in the above embodiment is realized.

Although the embodiments of the present disclosure have been described in connection with the drawings, those skilled in the art can make various modifications and variations without departing from the spirit and scope of the present disclosure, and such modifications and variations are all within the scope defined by the appended claims.

## Claims

1. A media content generation method, comprising:
presenting a media content generation interface, wherein the media content generation interface comprises a first text information input interface and an audio material acquisition control;
displaying an input component on the media content generation interface;
generating first text information in the first text information input interface in response to a triggering operation on the input component;
generating a second text information input interface on the media content generation interface in response to a text interface adding operation on the media content generation interface and/or in response to that the first text information exceeds an input range of the first text information input interface, wherein the second text information input interface is configured for generating second text information based on the triggering operation; and
generating preset media content to be posted based on text information to be posted, wherein the text information to be posted at least comprises the first text information and the second text information.

2. The method of claim 1, further comprising:
determining audio information corresponding to the media content generation interface; and
generating the preset media content to be posted based on the audio information and the text information to be posted.

3. The method of claim 2, wherein the determining audio information corresponding to the media content generation interface comprises:
acquiring audio information to be selected in response to a triggering operation on the audio material acquisition control; and
determining the audio information corresponding to the media content generation interface based on the audio information to be selected.

4. The method of claim 2, wherein the generating the preset media content to be posted based on the audio information and the text information to be posted comprises:
generating the preset media content to be posted based on the audio information and at least two pagination pictures corresponding to the text information to be posted, wherein the at least two pagination pictures correspond one-to-one with at least two text information input interfaces for generating the preset media content.

5. The method of any one of claims 1-4, wherein the displaying an input component on the media content generation interface comprises:
expanding the input component in the first text information input interface in response to a triggering operation on the first text information input interface.

6. The method of claim 5, further comprising:
hiding the input component in the first text information input interface or the second text information input interface in response to a retracting operation on the input component; and
positioning an input cursor to a corresponding text position in response to a clicking operation on the first text information or the second text information, and reviving the input component;
wherein a first height between the revived input component and the input cursor is greater than or equal to a first preset height.

7. The method of any one of claims 1-6, wherein determining whether the first text information exceeds the input range of the first text information input interface comprises:
determining a text height corresponding to the first text information generated in the first text information input interface; and
determining that the first text information exceeds the input range of the first text information input interface in response to determining that a difference between the text height and a predetermined height is less than a preset threshold.

8. The method of any one of claims 1-7, wherein the media content generation interface comprises a pagination identification component, the pagination identification component comprises an interface addition component; the in response to a text interface adding operation on the media content generation interface comprises:
responding to a triggering operation on the interface addition component on the media content generation interface.

9. The method of claim 8, wherein the pagination identification component further comprises a pagination presentation component, the method further comprising:
presenting the text information to be posted corresponding to the preset media content in the pagination presentation component as pagination thumbnail.

10. The method of claim 9, further comprising:
determining a target pagination picture in response to a sliding operation on the pagination presentation component; and
displaying the text information corresponding to the target pagination picture in the media content generation interface, and presenting the target pagination picture in the pagination presentation component in a centered and enlarged way.

11. The method of claim 10, further comprising:
determining whether to slide to last pagination picture; and
stopping sliding in response to determining to slide to the last pagination picture, and generating stop prompt information.

12. The method of claim 9, further comprising:
performing deletion and/or exchange in sequence of the pagination pictures in the pagination presentation component in response to an editing operation on each pagination picture in the pagination presentation component.

13. A media content presentation method comprising:
displaying a media content presentation interface, wherein the media content presentation interface comprises preset media content, and the preset media content is obtained by a posting user through inputting text information based on at least two text information input interfaces; and
switching to display at least two pagination pictures in the preset media content in response to a switching instruction on the preset media content, wherein the at least two pagination pictures correspond one-to-one with at least two text information input interfaces for generating the preset media content.

14. The method of claim 13, wherein the switching instruction on the preset media content comprises a switching operation triggered by a user on the media content presentation interface or playing of the preset media content to a preset time point.

15. The method of claim 13 or 14, wherein the displaying a media content presentation interface comprises:
displaying at least two pagination pictures in the preset media content, and playing audio information comprised in the preset media content.

16. The method of any one of claims 13-15, further comprising:
displaying an interaction component corresponding to the preset media content in the media content presentation interface; and
generating an interaction result in response to a triggering operation on the interaction component.

17. A media content generation apparatus, comprising:
a generation interface display module configured for presenting a media content generation interface, wherein the media content generation interface comprises a first text information input interface and an audio material acquisition control;
an input component display module configured for displaying an input component on the media content generation interface;
an information generation module configured for generating first text information in the first text information input interface in response to a triggering operation on the input component;
an interface generation module configured for generating a second text information input interface on the media content generation interface in response to a text interface adding operation on the media content generation interface and/or in response to that the first text information exceeds an input range of the first text information input interface, wherein the second text information input interface is configured for generating second text information based on the triggering operation; and
a media content generation module configured for generating preset media content to be posted based on text information to be posted, wherein the text information to be posted at least comprises the first text information and the second text information.

18. A media content presentation apparatus, comprising:
a presentation interface display module configured for displaying a media content presentation interface, wherein the media content presentation interface comprises posting control and preset media content, and the preset media content is obtained based on the media content generation method of any one of claims 1 to 12; and
a content presentation module configured for switching to display at least one pagination pictures in the preset media content in response to a switching operation on the preset media content.

19. An electronic device, wherein the device comprises:
a memory and a processor, the memory and the processor being communicatively connected to each other, the memory storing therein computer instructions, and the processor executing the computer instructions to perform the media content generation method of any one of claims 1 to 12, or to perform the media content presentation method of any one of claims 13 to 16.

20. A computer-readable storage medium storing computer instructions for causing a computer to execute the media content generation method of any one of claims 1 to 12, or to perform the media content presentation method of any one of claims 13 to 16.

21. A computer program product comprising a computer program, wherein the computer program, when executed by a processor, implements the media content generation method of any one of claims 1 to 12, or to perform the media content presentation method of any one of claims 13 to 16.

22. A computer program, wherein the computer program when executed by a processor implements the media content generation method of any one of claims 1 to 12, or to perform the media content presentation method of any one of claims 13 to 16.
